# EUROPEAN PATENT APPLICATION

(11) **EP 4 325 593 A1**
(43) Date of publication of application: **21.02.2024**
(21) Application number: 22927668.8
(22) Date of filing: 23.02.2022
(51) Int. Cl.: H01M 4/13, H01M 4/62, H01M 4/72, H01M 10/0525

(54) **ELECTRODE PLATE, ELECTRODE ASSEMBLY AND SECONDARY BATTERY**

(71) Applicant: Contemporary Amperex Technology Co., Limited, Ningde, Fujian 352100 (CN)
(72) Inventor: WU, Zhiyang, Ningde, Fujian 352100 (CN); HE, Changsheng, Ningde, Fujian 352100 (CN); LI, Keqiang, Ningde, Fujian 352100 (CN); LIU, Xiaosong, Ningde, Fujian 352100 (CN)
(74) Representative: von Tietzen und Hennig, Nikolaus
(86) International application number: PCT/CN2022/077402
(87) International publication number: WO 2023/159373

(57) **Abstract**

The present application provides an electrode plate, an electrode assembly, and a secondary battery. An electrode plate includes a current collector, an active material layer arranged on one surface of the current collector, and an electrical connection member electrically connected to the current collector. The active material layer is arranged on a main body portion of the current collector, the electrical connection member and the current collector are connected to each other by welding at an edge of the current collector, the welding connection region is referred to as a transfer welding region, and the current collector includes a support layer and an electrically conductive layer arranged on one surface of the support layer. The electrode plate further includes a first insulation layer arranged on a further surface of the current collector and covering at least the entirety of the transfer welding region when viewed in a thickness direction of the electrode plate. According to the present application, it is possible to improve the safety performance of the secondary battery and reduce an internal resistance of the secondary battery.

## Description

### Technical Field

The present application relates to the field of batteries, and in particular, to an electrode plate, an electrode assembly, and a secondary battery.

### Background Art

In recent years, due to the advantages of high energy density, high output power, long cycle life and low environmental pollution, secondary batteries are widely applied to energy-storage power supply systems, such as hydropower, thermal power, wind power and solar power stations, as well as electric tools, electric bicycles, electric motorcycles, electromobiles, consumer electronic products, military equipment, aerospace and other fields. Due to the great development of the secondary batteries, higher requirements have also been placed on the secondary batteries in terms of energy density, cycling performance, safety performance, etc.

Disclosed in the prior art is a current collector, including a dense support layer and a dense electrically conductive layer provided on at least one surface of the support layer. However, the current collector described above cannot form, by means of a traditional tab forming structure, a structure that enables conduction in a thickness direction of a battery. Therefore, it is necessary to transfer weld a metal tab to an edge of the current collector by ultrasonic welding. In this way, in the current collector described above, there are problems of poor safety of a secondary battery using the current collector due to the short circuit of welded-through metal when the metal tab is welded to the current collector, and the increased internal resistance of the secondary battery due to metal slag falling into other areas during welding.

### Summary of the Invention

The present application has been made in view of the above technical problems, and has been made is to provide an electrode plate, an electrode assembly, a secondary battery, a battery module, a battery pack, and a power consuming device, which can reliably prevent short circuit caused by welded-through metal during welding, thus improving the safety of a secondary battery using this electrode plate and reducing the internal resistance of the secondary battery.

To achieve the above objective, the present application provides an electrode plate, an electrode assembly, a secondary battery, a battery module, a battery pack, and a power consuming device, which electrode plate includes a first insulation layer arranged on another surface of a current collector and covering at least the entirety of a transfer welding region when viewed in a thickness direction.

A first aspect of the present application provides an electrode plate, including a current collector, an active material layer arranged on one surface of the current collector and an electrical connection member electrically connected to the current collector. The active material layer is arranged on a main body portion of the current collector, the electrical connection member and the current collector are connected to each other by welding at an edge of the current collector, the welding connection region is referred to as a transfer welding region, and the current collector includes a support layer and an electrically conductive layer arranged on one surface of the support layer. The electrode plate further includes a first insulation layer arranged on another surface of the current collector and covering at least the entirety of the transfer welding region when viewed in a thickness direction of the electrode plate.

Thus, in the present application, since the first insulation layer is arranged on the other surface of the current collector and covers at least the entirety of the transfer welding region when viewed in the thickness direction of the electrode plate, when the electrical connection member and the current collector are connected to each other by welding on one surface side of the current collector, even though the electrically conductive layer and the support layer of the current collector are welded through so that slag generated during welding and particulates falling inside in subsequent procedures fall through the welded-through electrically conductive layer and support layer into a film region for providing an active material layer, with the first insulation layer on the other surface of the current collector having a protective function to prevent the slag and the particulates from falling into the film region, it is possible to reliably prevent short circuit caused by welded-through metal during welding, thus improving the safety of a secondary battery using this electrode plate and reducing the internal resistance of the secondary battery.

In any embodiment, the support layer is formed from an insulating material having a fibrous porous structure. As a result, the ion permeability of the support layer can be improved, so that the electrochemical performance can be effectively improved.

In any embodiment, the support layer is a polyethylene film, a polypropylene film, a polyvinylidene chloride film, or a multi-layer composite film thereof. In this way, by forming the support layer from a polyethylene film, a polypropylene film, a polyvinylidene chloride film, or a multi-layer composite film thereof, the support layer with a high ion permeability can be reliably formed.

In any embodiment, when viewed in the thickness direction of the electrode plate, an edge of the first insulation layer coincides with an edge of the active material layer. In order to prevent the welding connection of the electrical connection member from adversely affecting the active material layer, the transfer welding region where the electrical connection member is connected by welding is preferably located outside an edge of the active material layer when viewed in the thickness direction of the electrode plate. Thus, by enabling the edge of the first insulation layer to coincide with the edge of the active material layer when viewed in the thickness direction of the electrode plate, it is possible to reliably ensure that the first insulation layer covers the entirety of the transfer welding region when viewed in the thickness direction of the electrode plate.

In any embodiment, the first insulation layer is formed from a resin material which is the same material as the support layer. As a result, the ion permeability of the first insulation layer can be improved, so that the electrochemical performance can be effectively improved.

In any embodiment, the first insulation layer is a polyethylene film, a polypropylene film, a polyvinylidene chloride film, or a multi-layer composite film thereof; or the first insulation layer is a binder or a resin material. In this way, by forming the first insulation layer from a polyethylene film, a polypropylene film, a polyvinylidene chloride film, or a multi-layer composite film thereof, the first insulation layer with a high ion permeability can be reliably formed. In additional, by forming the first insulation layer from a binder or a resin material, the insulation layer can be easily formed by coating and other means.

In any embodiment, the electrode plate further includes a second insulation layer arranged on one surface of the electrical connection member and covering at least the entirety of the transfer welding region when viewed in the thickness direction of the electrode plate. In this way, the second insulation layer can be used to fill riveting holes formed due to weld marks, to prevent the slag generated during welding and the particulates falling inside in subsequent procedures from falling into the riveting holes, so that it is possible to prevent poor hi-po and reduce the direct-current internal resistance of the secondary battery.

In any embodiment, the second insulation layer is a binder or a resin material. In this way, it is possible to utilize a binder or a resin material to reliably fill the riveting holes formed due to weld marks.

In any embodiment, a primer layer is provided between the active material layer and the current collector; and optionally, the primer layer has a width 1 mm to 3 mm smaller than that of the active material layer. With the primer layer being provided between the active material layer and the current collector, a bonding force between the current collector and an active material may be increased, ensuring that the active material layer is more firmly provided on a surface of the current collector; moreover, the primer layer may improve the current flow capacity and the electrochemical performance of the electrode plate. In additional, the primer layer has a width 1 mm to 3 mm smaller than that of the active material layer so that the electrical connection member can be prevented from coming into contact with the primer layer, which causes poor welding and false welding.

A second aspect of the present application provides an electrode assembly, including a first electrode plate and a second electrode plate, wherein one of the first electrode plate and the second electrode plate is an electrode plate in the first aspect of the present application, and a support layer of the one of the first electrode plate and the second electrode plate is arranged in close contact with the other one of the first electrode plate and the second electrode plate.

A third aspect of the present application provides an electrode assembly, including a first electrode plate and a second electrode plate, wherein the first electrode plate and the second electrode plate each are an electrode plate in the first aspect of the present application, a support layer of the first electrode plate is arranged in close contact with an active material layer of the second electrode plate, and a support layer of the second electrode plate is arranged in close contact with an active material layer of the first electrode plate.

A fourth aspect of the present application provides a secondary battery, including an electrode plate in the first aspect of the present application or an electrode assembly in the second or third aspect of the present application.

A fifth aspect of the present application provides a battery module, including a secondary battery in the fourth aspect of the present application.

A sixth aspect of the present application provides a battery pack, including a battery module in the fifth aspect of the present application.

A seventh aspect of the present application provides a power consuming device, including at least one selected from a secondary battery in the fourth aspect of the present application, a battery module in the fifth aspect of the present application and a battery pack in the sixth aspect of the present application.

In accordance with the present application, short circuit due to welded-through metal during welding can be reliably prevented.

### Brief Description of the Drawings

Fig. 1 is a cross-sectional view of an electrode plate according to an embodiment of the present application.
Fig. 2 is a top view of an electrode plate according to an embodiment of the present application.
Fig. 3 is a bottom view of a tab portion of an electrode plate according to an embodiment of the present application.
Fig. 4 is a top view of a tab portion of an electrode plate according to an embodiment of the present application.
Fig. 5 is a cross-sectional view of an electrode assembly according to an embodiment of the present application.
Fig. 6 is a top view of the electrode assembly shown in Fig. 5 after being wound up.
Fig. 7 is a cross-sectional view of an electrode assembly according to an embodiment of the present application.
Fig. 8 is a top view of the electrode assembly shown in Fig. 5 after being wound up.
Fig. 9 is a schematic view of a secondary battery according to an embodiment of the present application.
Fig. 10 is an exploded view of a secondary battery shown in Fig. 9 according to an embodiment of the present application.
Fig. 11 is a schematic view of a battery module according to an embodiment of the present application.
Fig. 12 is a schematic view of a battery pack according to an embodiment of the present application.
Fig. 13 is an exploded view of a battery pack shown in Fig. 11 according to an embodiment of the present application.
Fig. 14 is a schematic view of a power consuming device using a secondary battery as a power source according to an embodiment of the present application.

List of reference signs:
1 battery pack; 2 upper case body; 3 lower case body; 4 battery module; 5 secondary battery; 51 housing; 52 electrode assembly; 53 cover plate; 6 electrode plate; 61 current collector; 611 support layer; 612 electrically conductive layer; 62 active material layer; 63 electrical connection member; 64 first insulation layer; 65 second insulation layer; 66 primer layer; 7 electrode plate; 71 current collector; 72 active material layer; 73 electrical connection member; 8 separator; 52A electrode assembly; 6A electrode plate; 61A current collector; 611A support layer; 612A electrically conductive layer; 62A active material layer; 63A electrical connection member; 64A first insulation layer; 65A second insulation layer; 66A primer layer.

### Detailed Description of Embodiments

Hereinafter, the embodiments of the electrode plate, the electrode assembly, the secondary battery, the battery module, the battery pack and the power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1 to 3, 1 to 4, 1 to 5, 2 to 3, 2 to 4, and 2 to 5. In the present application, unless stated otherwise, the numerical range "a to b" denotes an abbreviated representation of any combination of real numbers between a and b, where both a and b are real numbers. For example, the numerical range "0 to 5" means that all real numbers between "0 to 5" have been listed herein, and "0 to 5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

The inventors have found that since an electrically conductive layer and a support layer of a current collector are dense structures and have smaller thicknesses (with respect to conventional metal foil current collectors such as aluminum foil or copper foil current collectors), when an electrical connection member is welded at an edge of the current collector, the electrically conductive layer and the support layer are prone to being welded through at a transfer welding region, and a battery would self-discharge or even be subjected to internal short circuiting if slag generated during welding and particulates falling inside in subsequent procedures fall through the welded-through electrically conductive layer and support layer into a film region. The inventors have found that in order to solve this problem, with a first insulation layer arranged on another surface of the current collector and covering at least the entirety of the transfer welding region when viewed in the thickness direction of the electrode plate, the first insulation layer has a protective function to prevent the slag and the particulates from falling into the film region, and short circuiting due to welded-through metal during welding may be reliably prevented. Therefore, the safety of a secondary battery using this electrode plate is improved as internal short circuiting is prevented, and on the direct-current internal resistance of the secondary battery is also reduced as the slag is prevented from falling into other regions.

In addition, the electrode plate, the battery assembly, the secondary battery, the battery module, the battery pack, and the power consuming device of the present application will be described below by appropriately referring to the accompanying drawings.

### [Electrode Plate]

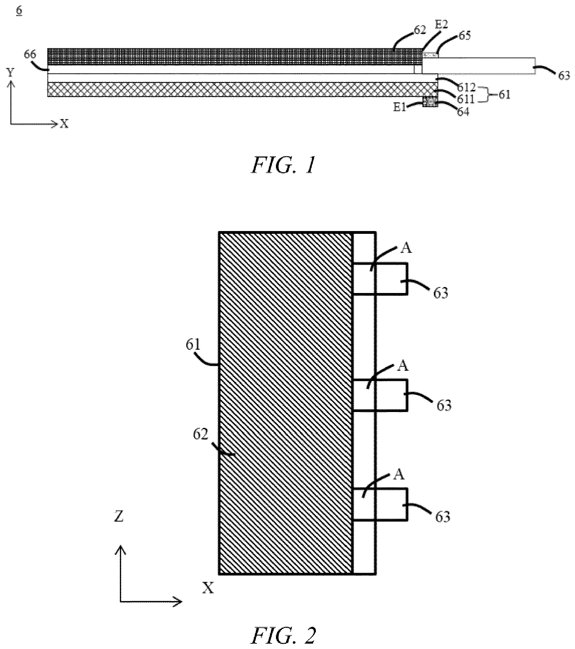

In an embodiment of the present application, an electrode plate is provided. As shown in Fig. 1, the electrode plate 6 includes a current collector 61, an active material layer 62 arranged on one surface of the current collector 61, and an electrical connection member 63 electrically connected to the current collector 61. Herein, the active material layer 62 is arranged on one surface of the current collector 61 via a primer layer 66 described below, but the active material layer 62 may alternatively be directly arranged on one surface of the current collector 61.

As shown in Figs 1. and 2, the active material layer 62 is arranged at a main body portion of the current collector 61, and the electrical connection member 63 and the current collector 61 are connected to each other by welding at an edge of the current collector 61. The welding connection region is referred to as a transfer welding region A.

The current collector 61 includes a support layer 611 and an electrically conductive layer 612 arranged on one surface of the support layer 611. In comparison with a traditional metal current collector, in the current collector of the present application, the electrically conductive layer 612 has electrical conduction and current collection functions, and is configured to provide electrons for the active material layer. The material of the electrically conductive layer is selected from at least one of a metal conductive material and a carbon-based conductive material. The metal conductive material is preferably selected from at least one of aluminum, copper, nickel, titanium, silver, and an alloy thereof. The carbon-based conductive material is preferably selected from at least one of graphite, acetylene black, graphene, and carbon nanotube. The material of the electrically conductive layer is preferably a metal conductive material, that is, the electrically conductive layer is preferably a metal electrically conductive layer. When the current collector is a positive electrode current collector, aluminum is generally used as the material of the electrically conductive layer; and when the current collector is a negative electrode current collector, copper is generally used as the material of the electrically conductive layer. In the current collector of the present application, the support layer is effective in supporting and protecting the electrically conductive layer. Since the support layer is generally of an organic polymer material or a polymer composite material, the support layer generally has a density lower than that of the electrically conductive layer, which can significantly increase the gravimetric energy density of the battery as compared to traditional metal current collectors.

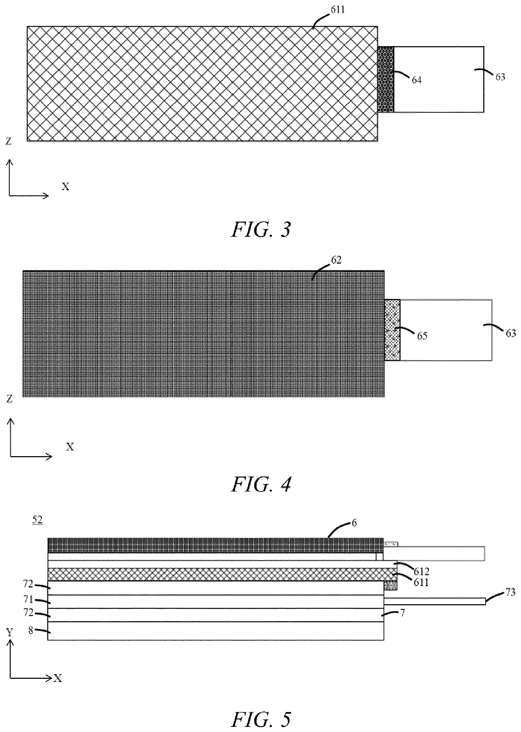

The electrode plate 6 further includes a first insulation layer 64. As shown in Figs 1 and 3, the first insulation layer 64 is arranged on another surface of the current collector 61 and covers at least the entirety of the transfer welding region A when viewed in a thickness direction Y of the electrode plate 6.

Thus, in the present application, since the first insulation layer is arranged on the other surface of the current collector and covers at least the entirety of the transfer welding region when viewed in the thickness direction of the electrode plate, when the electrical connection member and the current collector are connected to each other by welding on one surface side of the current collector, even though the electrically conductive layer and the support layer of the current collector are welded through so that slag generated during welding and particulates falling inside in subsequent procedures fall through the welded-through electrically conductive layer and support layer into a film region for providing an active material layer, with the first insulation layer on the other surface of the current collector having a protective function to prevent the slag and the particulates from falling into the film region, it is possible to reliably prevent short circuit caused by welded-through metal during welding, thus improving the safety of a secondary battery using this electrode plate and reducing the internal resistance of the secondary battery.

In some embodiments, the support layer 611 is formed from an insulating material having a fibrous porous structure. As a result, the ion permeability of the support layer can be improved, so that the electrochemical performance can be effectively improved.

In some embodiments, the support layer 611 is a polyethylene film, a polypropylene film, a polyvinylidene chloride film or a multi-layer composite film thereof. In this way, by forming the support layer from a polyethylene film, a polypropylene film, a polyvinylidene chloride film, or a multi-layer composite film thereof, the support layer with a high ion permeability can be reliably formed.

In some embodiments, as shown in Fig. 1, when viewed in the thickness direction Y of the electrode plate 6, an edge E1 of the first insulation layer 64 coincides with an edge E2 of the active material layer 62. In order to prevent the welding connection of the electrical connection member from adversely affecting the active material layer, the transfer welding region where the electrical connection member is connected by welding is preferably located outside an edge of the active material layer when viewed in the thickness direction of the electrode plate. Thus, by enabling the edge of the first insulation layer to coincide with the edge of the active material layer when viewed in the thickness direction of the electrode plate, it is possible to reliably ensure that the first insulation layer covers the entirety of the transfer welding region when viewed in the thickness direction of the electrode plate.

In some embodiments, the first insulation layer 64 is formed from a resin material which is the same material as the support layer 611. As a result, the ion permeability of the first insulation layer can be improved, so that the electrochemical performance can be effectively improved.

In some embodiments, the first insulation layer 64 is a polyethylene film, a polypropylene film, a polyvinylidene chloride film, or a multi-layer composite film thereof. In this way, by forming the first insulation layer from a polyethylene film, a polypropylene film, a polyvinylidene chloride film, or a multi-layer composite film thereof, the first insulation layer with a high ion permeability can be reliably formed. In some embodiments, the first insulation layer 64 is a binder or a resin material. Thus, the insulation layer can be easily formed by coating and other means. The binder is not specifically defined, and may include one or more of a styrene butadiene rubber (SBR), a water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA) and polyvinyl butyral (PVB).

In some embodiments, the electrode plate 6 further includes a second insulation layer 65. And as shown in Figs. 1 and 4, the second insulation layer 65 is arranged on one surface of the electrical connection member 63 and covers at least the entirety of the transfer welding region A when viewed in the thickness direction Y of the electrode plate 6. In this way, the second insulation layer can be used to fill riveting holes formed due to weld marks, to prevent the slag generated during welding and the particulates falling inside in subsequent procedures from falling into the riveting holes, so that it is possible to prevent poor hi-po.

In some embodiments, the second insulation layer 65 is a binder or a resin material. In this way, it is possible to utilize a binder or a resin material to reliably fill the riveting holes formed due to weld marks. The binder is not specifically defined, and may include one or more of a styrene butadiene rubber (SBR), a water-based acrylic resin, carboxymethyl cellulose (CMC), polyvinylidene fluoride (PVDF), polytetrafluoroethylene (PTFE), ethylene-vinyl acetate copolymer (EVA), polyvinyl alcohol (PVA) and polyvinyl butyral (PVB).

In some embodiments, a primer layer 66 is provided between the active material layer 62 and the current collector 61. Optionally, the primer layer 66 has a width in a width direction X 1 mm to 3 mm smaller than that of the active material layer 62 in the width direction X. With the primer layer being provided between the active material layer and the current collector, a bonding force between the current collector and an active material may be increased, ensuring that the active material layer is more firmly provided on a surface of the current collector; moreover, the primer layer may improve the current flow capacity and the electrochemical performance of the electrode plate. In additional, the primer layer has a width 1 mm to 3 mm smaller than that of the active material layer so that the electrical connection member can be prevented from coming into contact with the primer layer, which causes poor welding and false welding.

Apparently, the electrode plate of the present application may be a positive electrode plate or a negative electrode plate. When the electrode plate is a positive electrode plate, correspondingly, the current collector and the active material layer therein are a positive electrode current collector and a positive electrode active material layer, respectively. When the electrode plate is a negative electrode plate, correspondingly, the current collector and the active material layer therein are a negative electrode current collector and a negative electrode active material layer, respectively.

When the electrode plate 6 of the present application is a positive electrode plate, the positive electrode plate includes a positive electrode current collector and a positive electrode active material layer arranged on one surface of the positive electrode current collector. The positive electrode active material layer includes a positive electrode active material.

As an example, the positive electrode current collector has two opposite surfaces in the thickness direction thereof, and the positive electrode active material layer is arranged on either of the two opposite surfaces of the positive electrode current collector.

In some embodiments, the positive electrode current collector may be a composite current collector. The composite current collector may include a support layer formed from an insulating material having a fibrous porous structure, and an electrically conductive layer formed on one surface of the support layer. The composite current collector may be formed by forming a metal material (e.g., aluminum, an aluminum alloy, nickel, a nickel alloy, titanium, a titanium alloy, silver, and a silver alloy) on a support layer (e.g., a polyethylene film, a polypropylene film, a polyvinylidene chloride film, or a multi-layer composite film thereof).

In some embodiments, the positive active material may be a positive active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g. LiCoO₂), lithium nickel oxide (e.g. LiNiO₂), lithium manganese oxide (e.g. LiMnO₂, and LiMn₂O₄), lithium nickel cobalt oxide, lithium manganese cobalt oxide, lithium nickel manganese oxide, lithium nickel cobalt manganese oxide (e.g. LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (e.g. LiNi_{0.85}Co_{0.15}Al_{0.05}O₂), modified compounds thereof, and the like. Examples of lithium-containing phosphates of olivine structure may include, but are not limited to, at least one of lithium iron phosphate (e.g. LiFePO₄ (also abbreviated as LFP)), lithium iron phosphate and carbon composites, lithium manganese phosphate (e.g. LiMnPO₄), lithium manganese phosphate and carbon composites, lithium iron manganese phosphate, and lithium iron manganese phosphate and carbon composites.

In some embodiments, the positive electrode active material layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer also optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: dispersing the above-described components for preparing the positive electrode plate, such as a positive electrode active material, a conductive agent, a binder and any other components, in a solvent (e.g., N-methylpyrrolidone) to form a positive slurry; and coating the positive electrode current collector with the positive electrode slurry, followed by the procedures such as drying and cold pressing, so as to obtain the positive electrode plate.

When the electrode plate 6 of the present application is a negative electrode plate, the negative electrode plate includes a negative electrode current collector and a negative electrode active material layer arranged on one surface of the negative electrode current collector. The negative electrode active material layer includes a negative electrode active material.

As an example, the negative electrode current collector has two opposite surfaces in the thickness direction thereof, and the negative electrode active material layer is arranged on either of the two opposite surfaces of the negative electrode current collector.

In some embodiments, the negative electrode current collector may be a composite current collector. The composite current collector may include a support layer formed from an insulating material having a fibrous porous structure, and an electrically conductive layer formed on one surface of the support layer. The composite current collector may be formed by forming a metal material (e.g., copper, a copper alloy, nickel, a nickel alloy, titanium, a titanium alloy, silver, and a silver alloy) on a support layer (e.g., a polyethylene film, a polypropylene film, a polyvinylidene chloride film, or a multi-layer composite film thereof).

In some embodiments, the negative electrode active material may be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode active material layer also optionally includes a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode active material layer also optionally includes a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode active material layer also optionally comprises other auxiliary agents, e.g., a thickener (e.g. sodium carboxymethyl cellulose (CMC-Na)).

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrode Assembly]

In an embodiment of the present application, an electrode assembly is provided. The electrode assembly 52 includes a positive electrode plate (first electrode plate) 6, a negative electrode plate (second electrode plate) 7, and a separator 8 which prevents short-circuiting of positive and negative electrodes when the electrode assembly is made by a winding process and which also allows ions to pass through. In this specification, the positive electrode plate is referred to as the first electrode plate and the negative electrode plate is referred to as the second electrode plate, and vice versa.

In some embodiments, the positive electrode plate among the positive and negative electrode plates is the electrode plate 6 having the above-mentioned structure of the present application. The negative electrode plate among the positive and negative electrode plates is the electrode plate 7 having a conventional structure, and vice versa.

As shown in Fig. 5, the negative electrode plate 7 includes a negative electrode current collector 71, negative electrode active material layers 72 formed on two surfaces of the negative electrode current collector 71, and an electrical connection member 73 electrically connected to the negative electrode current collector 71. The support layer 611 of the positive electrode plate 6 is arranged in close contact with the negative electrode plate 7 as viewed in a length direction X of the electrode plate.

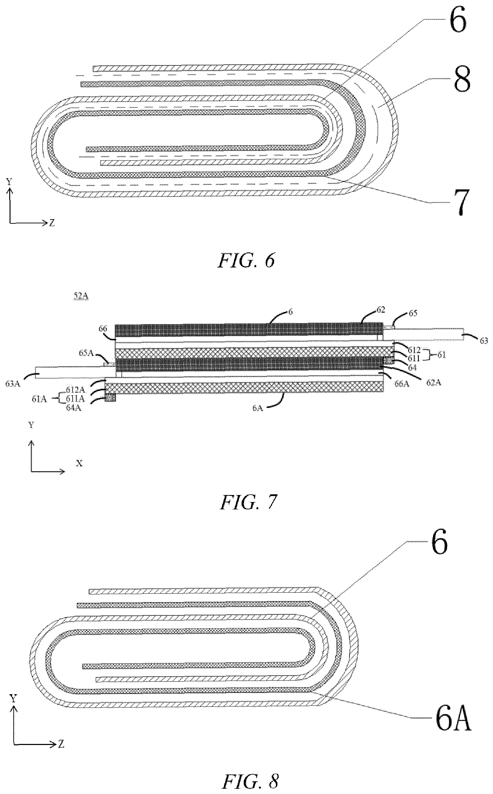

Fig. 6 is a top view of the electrode assembly 52 shown in Fig. 5 after being wound up. After the electrode assembly is wound up, the positive electrode active material layer of the positive electrode plate 6 is arranged in close contact with the separator 8.

In this way, it is not necessary to provide a separator between the positive electrode plate 6 and the negative electrode plate 7 in this embodiment, and the support layer 611 functions as a separator between the positive electrode plate 6 and the negative electrode plate 7. The negative electrode plate 7 is separated from the positive electrode plate 6 by the separator 8.

Fig. 7 is a cross-sectional view of an electrode assembly 52A according to an embodiment of the present application. Fig. 8 is a top view of the electrode assembly 52A shown in Fig. 3 after being wound up. The electrode assembly 52A differs from the electrode assembly 52 described above in that the positive electrode plate and the negative electrode plate are respectively the electrode plates having the above structure of the present application. That is, the negative electrode plate 6A includes a current collector 61A, an active material layer 62A arranged on one surface of the current collector 61A, and an electrical connection member 63A electrically connected to the current collector 61A. Herein, the active material layer 62A is arranged on one surface of the current collector 61A via a primer layer 66A, but the active material layer 62A may alternatively be directly arranged on one surface of the current collector 61. The electrode plate 6A further includes a first insulation layer 64A. The first insulation layer 64A is arranged on another surface of the current collector 61A and covers at least the entirety of the transfer welding region A when viewed in a thickness direction Y of the electrode plate 6A.

As shown in Figs. 7 and 8, in this embodiment, the support layer 611 of the positive electrode plate 6 is arranged in close contact with the negative electrode active material layer 62A of the negative electrode plate 6A, and a support layer 611A of the negative electrode plate 6A is arranged in close contact with the positive electrode active material layer 62 of the positive electrode plate 6. In this way, in this embodiment, it is not necessary to provide a separator between the positive and negative electrode plates 6, 6A, and the support layers 611, 611A function as separators between the positive and negative electrode plates 6, 6A.

In addition, the foregoing method is illustrated in the form of wound electrode plates as an example, and it is also applicable to stacked electrode plates.

### [Secondary Battery]

In one embodiment of the present application, a secondary battery is provided. The secondary battery includes the electrode plate as described above in the present application or the electrode assembly as described above in the present application.

The secondary battery further includes an electrolyte. During a charge/discharge process of the battery, active ions are intercalated and de-intercalated back and forth between a positive electrode plate and a negative electrode plate. The electrolyte serves to conduct ions between the positive electrode plate and the negative electrode plate.

### (Electrolyte)

The electrolyte serves to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some embodiments, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### (Separator)

In some embodiments, in order to prevent short-circuiting of positive and negative electrodes and to allow ions to pass through, the secondary battery may further include a separator provided between the positive electrode plate and the negative electrode plate. However, since a support layer in the electrode plate of the present application can also function as a separator, in the secondary battery of the present application, when the positive electrode plate and the negative electrode plate are separated by the support layer, no additional separator may be provided. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film and also a multi-layer composite film, and is not limited particularly. When the separator is a multi-layer composite film, the materials in the respective layers may be same or different, which is not limited particularly.

In some embodiments, the positive electrode plate and the negative electrode plate, and the separator provided as required can be made into the electrode assembly by a winding process or a lamination process.

In some embodiments, the secondary battery may include an outer package. The outer package can be used to encapsulate the above-mentioned electrode assembly and electrolyte.

In some embodiments, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, and polybutylene succinate, etc.

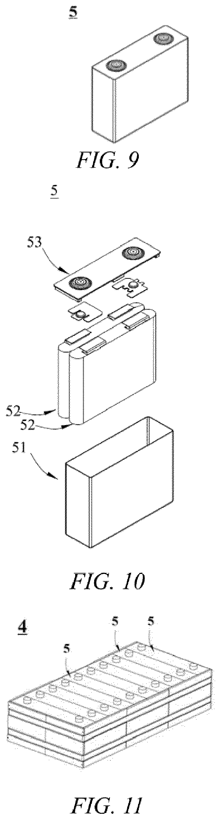

The shape of the secondary battery is not particularly limited in the present application, and may be cylindrical, square or of any other shape. For example, Fig. 9 shows a secondary battery 5 of a square structure as an example.

In some embodiments, referring to Fig. 10, an outer package may include a housing 51 and a cover plate 53. Herein, the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate and the negative electrode plate, and the separator provided as required may be subjected to a winding process or a laminating process to form the electrode assembly 52. The electrode assembly 52 is packaged in the accommodating cavity. The electrolyte is infiltrated into the electrode assembly 52. The number of the electrode assemblies 52 contained in the secondary battery 5 may be one or more, and can be selected by those skilled in the art according to actual requirements.

In some embodiments, the secondary battery may be assembled into a battery module, and the number of the secondary batteries contained in the battery module may be one or more, and the specific number can be selected by those skilled in the art according to the application and capacity of the battery module.

### [Battery Module]

Fig. 11 shows a battery module 4 as an example. Referring to Fig. 11, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by means of fasteners.

Optionally, the battery module 4 may further include a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

### [Battery Pack]

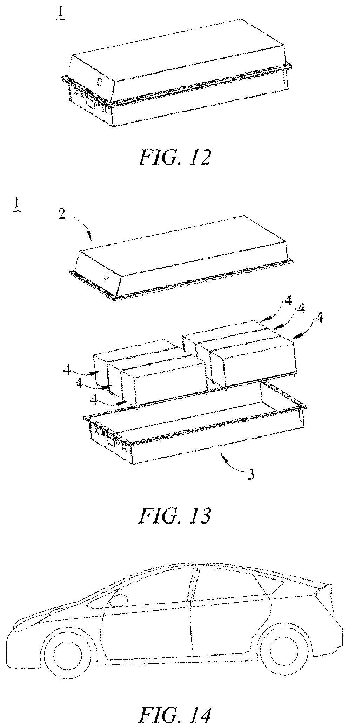

Figs. 12 and 13 show a battery pack 1 as an example. Referring to Figs. 12 and 13, the battery pack 1 may include a battery case and a plurality of battery modules 4 provided in the battery case. The battery case includes an upper case body 2 and a lower case body 3. The upper case body 2 can cover the lower case body 3 to form a closed space for accommodating the battery modules 4. The plurality of battery modules 4 may be arranged in the battery case in any manner.

### [Power Consuming Device]

In addition, the present application further provides a power consuming device including at least one of the secondary battery, the battery module, or the battery pack provided by the present application. The secondary battery, the battery module or the battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, the battery module or the battery pack can be selected according to the usage requirements thereof.

Fig. 14 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the electrical apparatus may be a mobile phone, a tablet computer, a laptop computer, etc. The power consuming device is generally required to be thin and light, and may use the secondary battery as a power supply.

### Examples

Current collectors used in the electrode plates in examples and comparative examples are prepared as follows:
1. Preparation of current collector:
   A support layer having a thickness (5000 nm) is selected, and an electrically conductive layer having a thickness (2000 nm) is formed on one surface by means of vacuum evaporation, mechanical rolling or bonding. A first insulation slurry is coated on another surface and dried to obtain a first insulation layer.
   (1) The forming conditions of a vacuum evaporation method are as follows:
      the support layer subjected to a surface cleaning treatment is placed into a vacuum plating chamber, and a high-purity metal wire in the metal evaporation chamber is melted and evaporated at a high temperature of 1300°C to 2000°C. The evaporated metal passes through a cooling system in the vacuum plating chamber, and finally is deposited on the surface of the support layer to form an electrically conductive layer.
   (2) The forming conditions of a mechanical rolling method are as follows: the foil of the material of the electrically conductive layer is placed in a mechanical roller, and rolled to a predetermined thickness by applying a pressure of 20t to 40t, and then placed onto the surface of the support layer that has been subjected to a surface cleaning processing; finally, the two are placed in the mechanical roller and are tightly bonded by applying a pressure of 30t to 50t.
   (3) The forming conditions of a bonding method are as follows: the foil of the material of the electrically conductive layer is placed in a mechanical roller, and rolled to a predetermined thickness by applying a pressure of 20t to 40t; a mixed solution of PVDF and NMP is then applied to a surface of the support layer that has been subjected to a surface cleaning processing; and finally, the electrically conductive layer of the above predetermined thickness is bonded to the surface of the support layer and dried at 100°C.
2. Preparation of electrode plate:
   (1) Positive electrode plate without conductive primer layer:
      A 92 wt% positive electrode active material (if no specific material is specified, NCM333 is used by default), a 5 wt% conductive agent Super-P ("SP" for short), and a 3 wt% PVDF are stirred evenly with a solvent NMP, to prepare a positive electrode active material layer slurry (the composition of the active material layer slurry in some embodiments may vary, and in this case, the specified composition in this embodiment shall prevail). Extrusion coating is performed to apply, through partition coating, the positive electrode active material layer slurry on one surface of the composite current collector prepared by the foregoing method; and drying is performed at 85°C to obtain a positive electrode active material layer. Then, the current collector with the respective coating layer is cold-pressed, cut, and then dried under vacuum at 85°C for 4 hours, and a tab is welded to obtain a positive electrode plate.
   (2) Conventional positive electrode plate:
      The current collector is an Al foil having a thickness of 12 µm. Similar to the preparation method of the foregoing positive electrode plate, the positive electrode active material layer slurry is directly applied on the surface of the current collector of the Al foil, and then the conventional positive electrode plate is obtained through post-processing.
   (3) Positive electrode plate with conductive primer layer:
      A conductive material (such as conductive carbon black) and a binder (such as PVDF or polyacrylic acid) at a specified ratio (4 : 1), and an optional active material are dissolved in an appropriate solvent (such as NMP or water), and stirred evenly to form a primer slurry.

The primer slurry is evenly applied on a surface of the composite current collector at a coating speed of 20 m/min, and a primer layer is dried at an oven temperature is 70°C to 100°C for 5 min.

After the primer layer is fully dried, a 92 wt% positive electrode active material, a 5 wt% conductive agent Super-P ("SP" for short), and 3 wt% PVDF are stirred evenly with a solvent NMP, to prepare a positive electrode active material layer slurry. Extrusion coating is performed to apply the positive electrode active material layer slurry on the surface of the primer layer through partition coating; and drying is performed at 85°C to obtain a positive electrode active material layer. Then, post-processing is performed to obtain a positive electrode plate with a conductive primer layer.

### (4) Negative electrode plate without conductive primer layer:

A negative electrode active material artificial graphite, a conductive agent Super-P, a thickener CMC, and a bonder SBR are added to a deionized water solvent at a mass ratio of 96.5 : 1.0 : 1.0 : 1.5, and mixed evenly to prepare a negative electrode active material layer slurry. Extrusion coating is performed to apply the negative electrode active material layer slurry on one surface of the composite current collector prepared by the foregoing methods through partition coating; and drying is performed at 85°C to obtain a negative electrode active material layer.

Then, the current collector with the respective coating layer is cold-pressed, cut, and then dried under vacuum at 110°C for 4 hours, and a tab is welded to obtain a negative electrode plate.

### (5) Conventional negative electrode plate:

The current collector is a Cu foil having a thickness of 8 µm. Similar to the preparation method of the above negative electrode plate, the negative electrode active material layer slurry is directly applied on the surface of the current collector of the Cu foil, and then the conventional negative electrode plate is obtained through post-processing.

### (6) Negative electrode plate with conductive primer layer:

A conductive material (such as conductive carbon black) and a binder (such as PVDF or polyacrylic acid) at a specified ratio (4 : 1), and an optional active material are dissolved in an appropriate solvent (such as NMP or water), and stirred evenly to form a primer slurry.

The primer slurry is evenly applied on a surface of the composite current collector at a coating speed of 20 m/min, and a primer layer is dried at an oven temperature is 70°C to 100°C for 5 min.

After the primer layer is completely dried, a negative electrode active material artificial graphite, a conductive agent Super-P, a thickener CMC, and a bonder SBR are added to a deionized water solvent at a mass ratio of 96.5 : 1.0 : 1.0 : 1.5, and mixed evenly to prepare a negative electrode active material layer slurry. Extrusion coating is performed to apply the negative electrode active material layer slurry on the primer layer of the current collector by partition coating; and drying is performed at 85°C to obtain a negative electrode active material layer. Then, post-processing is performed to obtain a negative electrode plate having a conductive primer layer in an extension area.

### 3. Preparation of battery:

Through a conventional battery preparation process, a positive electrode plate (having a compacted density of 3.4 g/cm³), a negative electrode plate (having a compacted density of 1.6 g/cm³) and a PP/PE/PP separator (which may be two separators, one separator or no separator as required) are wound up together into a bare cell, and the bare cell is then placed in a battery housing; an electrolyte solution (having a volume ratio of EC to EMC of 3 : 7, and a concentration of LiPF6 of 1 mol/L) is filled; then after processes such as sealing and formation, a lithium-ion secondary battery (hereinafter referred to as the battery for short) is finally obtained.

### 5. Battery testing method:

1) electrode plate lap-joint test:
   The positive and negative electrode plates prepared in above 3 are connected to positive and negative electrodes of a battery with 2.2 Ah capacity and 4.2 V voltage, respectively, the positive electrode plate is directly in contact with the negative electrode, and whether there are sparks is observed. Moreover, a plurality of lap-joint points are selected, the same lap-joint method is used each time to verify protection effect, and the morphology of the electrode plates is observed.
2) DCR (direct-current internal resistance) testing method:
   According to the physical formula R = V/I, a large constant DC current (currently, a large current of 40A-80A is generally used) is forcedly introduced by a test apparatus to the battery for a short period of time (generally 2-3 seconds), the voltage across the battery is then measured, and the current internal resistance of the battery is calculated according to the formula.

### 6. Test results and discussion:

### 6.1 Effect of first and second insulation layers on safety and internal resistance of secondary battery

The effect of first and second insulation layers on the performance of a battery, especially on the safety and the direct-current internal resistance of a secondary battery, will be illustrated below by taking a positive electrode plate as an example. According to a formulation of Table 1 below, an electrode plate is prepared basically according to "2. Preparation of electrode plate" described above, and a second insulation slurry is optionally re-applied, and dried to obtain a second insulation layer. Then, according to "3. Preparation of battery" described above, a battery is finally assembled and tested.

**Table 1**

| Secondary battery | Positive electrode plate | | | | | | Negative electrode plate | DCR | Lap-joint test | |
|---|---|---|---|---|---|---|---|---|---|---|
| | Organic support layer | Primer layer | First insulation layer | Second insulation layer | Boundary distance between active material layer and first insulation layer in X direction (mm) | Boundary distance between primer layer and active material layer in X direction (mm) | | | | |
| Example 1 | Polyethylene film | / | Styrene butadiene rubber | / | 0 | / | Conventional electrode plate | 0. 95 mΩ | Dark spot, no spark | |
| Example 2 | Polyethylene film | / | Water-based acrylic resin | / | 0 | / | Conventional electrode plate | 0.94 mΩ | Dark spot, no spark | |
| Example 3 | Polyethylene film | / | Polyethylene film | / | 0 | / | Conventional electrode plate | 0.954 mΩ | Dark spot, no spark | |
| Example 4 | Polyethylene film | / | Styrene butadiene rubber | / | 1 | / | Conventional electrode plate | 0.943 mΩ | Black spot, no spark | |
| Example 5 | Polyethylene film | / | Styrene butadiene rubber | / | -1 | / | Conventional electrode plate | 0.952 mΩ | Dark spot, no spark | |
| Example 6 | Polyethylene film | / | Styrene butadiene rubber | Styrene butadiene rubber | 0 | / | Conventional electrode plate | 0.8 mΩ | Dark spot, no spark | |
| Example 7 | Polyethylene film | / | Styrene butadiene rubber | | Water-based acrylic resin | 0 | / | Conventional electrode plate | 0.85 mΩ | Dark spot, no spark |
| Example 8 | Polyethylene film | Conductive carbon black plus PVDF | Styrene butadiene rubber | | Water-based acrylic resin | 0 | 1 | Conventional electrode plate | 0.75 mΩ | Dark spot, no spark |
| Example 9 | Polyethylene film | Conductive carbon black plus PVDF | Styrene butadiene rubber | | Water-based acrylic resin | 0 | 3 | Conventional electrode plate | 0.7 mΩ | Dark spot, no spark |
| Example 10 | Polyethylene film | Conductive carbon black plus PVDF | Styrene butadiene rubber | | Water-based acrylic resin | 0 | 0 | Conventional electrode plate | 0.8 mΩ | Dark spot, no spark |
| Example 11 | Polyethylene film | Conductive carbon black plus PVDF | Styrene butadiene rubber | | Water-based acrylic resin | 0 | 4 | Conventional electrode plate | 0.83 mΩ | Dark spot, no spark |
| Comparative Example 1 | Conventional electrode plate | | | | | | | Conventional electrode plate | 0.85 mΩ | Dark spot, no spark |
| Comparative Example 2 | Polyethylene film | / | / | / | | / | / | Conventional electrode plate | 0.88 mΩ | Sparking |

| | | | | | | | | | | |
|---|---|---|---|---|---|---|---|---|---|---|
| Dark spot (due to statistic electricity), black dot (due to sparks) | | | | | | | | | | |

From Table 1, it can be seen that through a comparison of Examples 1 to 5 with Comparative Examples 1 and 2, Examples 1 to 5 with a first insulation layer exhibit good protection effect in the lap-joint test, and have a direct-current internal resistance close to the conventional electrode plates.

In additional, it can be seen from a comparison of Example 1 with Example 6 that by further providing a second insulation layer, the direct-current internal resistance of the secondary battery can be further reduced. It can be seen from a comparison of Example 7 with Example 8 that by further providing a primer layer, the direct-current internal resistance of the secondary battery can be further reduced.

In addition, it can be seen from a comparison of Example 3 with Example 4 that the protection effect in the lap-joint test can be further improved by boundaries of the active material layer and the first insulation layer coinciding in the X direction.

In additional, it can be seen from a comparison of Examples 8 and 11 with Examples 9 and 10 that the direct-current internal resistance of the secondary battery can be further reduced by setting the boundary distance between the primer layer and the active material layer in the X direction to 1-3 mm.

### 6.2 Effect of composite current collector having organic support layer on volumetric energy density of secondary battery

The effect of a composite current collector having an organic support layer on the volumetric energy density of a secondary battery will be illustrated below in conjunction with Table 2.

**[Table 2]**

| Secondary battery | Positive electrode plate | Negative electrode plate | Volumetric energy density |
|---|---|---|---|
| Example 1 | Composite current collector | Conventional electrode plate | 550 Wh/L |
| Example 12 | Composite current collector | Composite current collector | 670 Wh/L |
| Comparative Example 1 | Conventional electrode plate | Conventional electrode plate | 490 Wh/L |

It can be seen from Table 2 that when a composite collector having an organic support layer is used as an electrode plate, the volumetric energy density can be increased as compared to a secondary battery having positive and negative electrode plates which are both conventional electrode plates, and when composite collectors each having an organic support layer are used as the two electrode plates, the volumetric energy density can be further improved.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. An electrode plate, comprising a current collector, an active material layer arranged on one surface of the current collector, and an electrical connection member electrically connected to the current collector,
the active material layer being arranged at a main body portion of the current collector, the electrical connection member and the current collector being connected to each other by welding at an edge of the current collector, the welding connection region being referred to as a transfer welding region, and
the current collector comprising a support layer and an electrically conductive layer arranged on one surface of the support layer,
wherein the electrode plate further comprises a first insulation layer arranged on another surface of the current collector and covering at least the entirety of the transfer welding region when viewed in a thickness direction of the electrode plate.

2. The electrode plate according to claim 1, wherein
the support layer is formed from an insulating material having a fibrous porous structure.

3. The electrode plate according to claim 2, wherein
the support layer is a polyethylene film, a polypropylene film, a polyvinylidene chloride film, or a multilayer composite film thereof.

4. The electrode plate according to any one of claims 1 to 3, wherein
when viewed in the thickness direction of the electrode plate, an edge of the first insulation layer coincides with an edge of the active material layer.

5. The electrode plate according to any one of claims 1 to 3, wherein
the first insulation layer is formed from a resin material which is the same material as the support layer.

6. The electrode plate according to claim 1, wherein
the first insulation layer is a polyethylene film, a polypropylene film, a polyvinylidene chloride film, or a multi-layer composite film thereof,
or the first insulation layer is a binder or a resin material.

7. The electrode plate according to any one of claims 1 to 6, further comprising
a second insulation layer arranged on one surface of the electrical connection member and covering at least the entirety of the transfer welding region when viewed in the thickness direction of the electrode plate.

8. The electrode plate according to claim 7, wherein
the second insulation layer is a binder or a resin material.

9. The electrode plate according to any one of claims 1 to 8, wherein
a primer layer is provided between the active material layer and the current collector; and
optionally, the primer layer has a width 1 mm to 3 mm smaller than that of the active material layer.

10. An electrode assembly, comprising
a first electrode plate and a second electrode plate, wherein
one of the first electrode plate and the second electrode plate is an electrode plate of any one of claims 1 to 9,
and a support layer of the one of the first electrode plate and the second electrode plate is arranged in close contact with the other one of the first electrode plate and the second electrode plate.

11. An electrode assembly, comprising
a first electrode plate and a second electrode plate, wherein
the first electrode plate and the second electrode plate each are an electrode plate of any one of claims 1 to 9,
a support layer of the first electrode plate is arranged in close contact with an active material layer of the second electrode plate, and
a support layer of the second electrode plate is arranged in close contact with an active material layer of the first electrode plate.

12. A secondary battery, comprising
an electrode plate of any one of claims 1 to 9 or an electrode assembly of claim 10 or 11.

13. A battery module, comprising
a secondary battery of 12.

14. A battery pack, comprising
a battery module of claim 13.

15. A power consuming device, comprising
at least one selected from a secondary battery of claim 12, a battery module of claim 13 and a battery pack of claim 14.
